# EUROPÄISCHE PATENTSCHRIFT

(11) **EP 3 533 581 B1**
(45) Veröffentlichungstag und Bekanntmachung des Hinweises auf die Patenterteilung: **26.07.2023**
(21) Anmeldenummer: 18159678.4
(22) Anmeldetag: 02.03.2018
(51) Int. Cl.: B29C 45/14, B65D 1/24, B29L 31/00

(54) **ARBEITSVERFAHREN EINER SPRITZGUSSANLAGE UND VERFAHREN ZUR HERSTELLUNG EINES TRANSPORTBEHÄLTERS**
OPERATING PROCESS OF AN INJECTION MOULDING INSTALLATION AND METHOD FOR THE PREPARATION OF A TRANSPORT CONTAINER
PROCÉDÉ DE TRAVAIL D'UNE INSTALLATION DE MOULAGE PAR INJECTION ET PROCÉDÉ DE FABRICATION D'UN RÉCIPIENT DE TRANSPORT

(43) Veröffentlichungstag der Anmeldung: 04.09.2019
(73) Patentinhaber: Oberland M & V GmbH, 88410 Bad Wurzach (DE)
(72) Erfinder: Götz, Kira, 88212 Ravensburg (DE); Götz, Lisa, 88214 Ravensburg (DE)
(74) Vertreter: Lahrtz, Fritz

(56) Entgegenhaltungen:
- EP-A1- 2 554 485
- WO-A1-00/30827

## Beschreibung

Die Erfindung betrifft ein Arbeitsverfahren einer Spritzgussanlage zur Herstellung von Transportbehältern mit Inmould-Folien, sowie ein Verfahren zur Herstellung eines derartigen Transportbehälters und eine Spritzgussanlage.

### Stand der Technik

Aus EP 2 554 485 A1 ist ein Transportbehälter bekannt mit einem Behältergrundkörper, der einen Boden und vier Seitenwände aufweist, wobei zumindest eine der Seitenwände eine Grundfläche und zumindest ein bezüglich der Grundfläche erhaben ausgebildetes Reliefelement oder zumindest ein bezüglich der Grundfläche vertieft ausgebildetes Reliefelement aufweist. Dabei ist vorgesehen, dass die Seitenwand eine oder mehrere zumindest teilweise jeweils die Grundfläche und das Reliefelement oder das invertierte Reliefelement bedeckende Inmould-Folie(n) aufweist. Die Inmould-Folie bedeckt eine in die Wandebene hineinragende versetzte Struktur, zum Beispiel eine Holzmaserung, und zugleich gegenüber der Grundfläche erhaben und/oder vertieft ausgebildete Textelemente. WO 00/30827 A1 offenbart ein Arbeitsverfahren einer Spritzgussanlage geeignet zur Herstellung von Transportbehältern mit Inmould-Folien , wobei die Spritzgussanlage zumindest eine Robotervorrichtung und ein Spritzgusswerkzeug aufweist,wobei das Arbeitsverfahren die folgenden Schritte umfasst: a) Zuführen von Inmould-Folien zu dem Spritzgusswerkzeug als Bandware b) Vereinzeln der Inmould-Folien und c) Einlegen der Inmould-Folien mittels der Robotervorrichtung in eine Werkzeugbacke des Spritzgusswerkzeugs zur anschließenden Hinterspritzung.

Bei dem Herstellungsverfahren des Transportbehälters wird die Inmould-Folie in ein Spritzgusswerkzeug eingelegt und von dem den Behältergrundkörper ausbildenden Kunststoff hinterspritzt. Die Werkzeugbacken des Spritzgusswerkzeugs sind dabei mit einer Werkzeugbackengrundfläche und bezüglich der Werkzeugbackengrundfläche erhaben und oder vertieft ausgebildeten Werkzeugbackenreliefelementen bzw. invertierten Werkzeugbackenreliefelementen ausgestattet, die dem Negativ der Grundfläche und der auszubildenden invertierten Reliefelemente bzw. Reliefelemente entsprechen. Die Werkzeugbackengrundfläche weist auch das Negativ zu den der Inmould-Folie einzuprägenden, in die Wandebene hineinragenden versetzten Strukturen auf.

Vor dem Einlegen in das Werkzeug wird die Inmould-Folie temperiert, um die Anpassung an die Strukturen zu erleichtern und um Rissbildung oder Überstreckungen zu vermeiden. Durch das Temperieren der Inmould-Folie vor dem Einlegen in das Werkzeug wird außerdem erreicht, dass Vakuumkanten, welche die Inmould-Folie im Werkzeug an ihrer definierten Position halten, diese nicht nur auf ihrer Vakuum-Kantenlinie ansaugen, sondern dass hinter der Inmould-Folie ein flächiger Unterdruck erzeugt wird, bis die Inmould-Folie vorgeformt an der dreidimensionalen Struktur anliegt.

Demgegenüber liegt der Erfindung die Aufgabe zu Grunde, ein Arbeitsverfahren einer Spritzgussanlage, eine Spritzgussanlage und ein Verfahren zur Herstellung eines Transportbehälters zu schaffen, welche eine präzisere Positionierung der Inmould-Folie innerhalb des Spritzgusswerkzeugs ermöglichen. Darüber hinaus ist es eine Aufgabe der Erfindung, ein Verfahren zur Herstellung eines Transportbehälters zu schaffen, welcher neben vorteilhaften Eigenschaften zur Vermeidung von oberflächlichen Defekten einen neuen und einprägsamen Gesamteindruck aufweist, durch welchen er sich für die beteiligten Verkehrskreise aus der Vielzahl der bereits vorhandenen Transportbehälter abhebt.

### Offenbarung der Erfindung

Die Aufgabe wird gelöst durch ein Arbeitsverfahren einer Spritzgussanlage zur Herstellung von Transportbehältern mit Inmould-Folien, durch eine Spritzgussanlage und durch ein Verfahren zur Herstellung eines Transportbehälters mit den Merkmalen der unabhängigen Ansprüche. Vorteilhafte Weiterbildungen der Erfindung sind in den Unteransprüchen angegeben.

Bei einem erfindungsgemäßen Arbeitsverfahren einer Spritzgussanlage zur Herstellung von Transportbehältern mit Inmould-Folien, insbesondere Flaschenkästen zur Aufnahme von Getränkeflaschen oder Flaschengebinden, ist vorgesehen, dass die Spritzgussanlage zumindest eine Robotervorrichtung und ein Spritzgusswerkzeug aufweist. Das Arbeitsverfahren umfasst dabei die folgenden Schritte:
a) Zuführen von Inmould-Folien zu dem Spritzgusswerkzeug als Bandware, insbesondere Rollenware,
b) Vereinzeln der Inmould-Folien mittels der Robotervorrichtung, und
c) Einlegen der Inmould-Folie mittels der Robotervorrichtung in eine Werkzeugbacke des Spritzgusswerkzeugs zur anschließenden Hinterspritzung.

Vorteilhaft wird die Inmould-Folie dem Spritzgusswerkzeug als Bandware, insbesondere Rollenware, zugeführt. Die Bereitstellung der Inmould-Folien als Bandware, insbesondere Rollenware, hat Vorteile bei der Produktion, bei der Lagerung und beim Transport, da die Vereinzelung der Inmould-Folien nicht bereits beim Zuliefererbetrieb erfolgt.

Vorteilhaft ist weiterhin vorgesehen, dass die Inmould-Folien mittels der Robotervorrichtung vereinzelt werden. Gegenüber einer manuellen Vereinzelung bedeutet dies einen Gewinn an Präzision und Tempo. Die Verwendung der Robotervorrichtung zum Einlegen der Inmould-Folien in die Werkzeugbacke des Spritzgusswerkzeugs ermöglicht eine besonders präzise Positionierung der Inmould-Folie im Spritzgusswerkzeug, sodass die gewünschte Optik der Transportbehälter sichergestellt ist, bei gleichzeitig hohem Durchsatz.

Im Schritt a) kann die Zuführung der Inmould-Folie manuell erfolgen. Bevorzugt ist allerdings vorgesehen, dass die Zuführung der Inmould-Folien durch eine Zuführvorrichtung erfolgt, welche beispielsweise Spulen, Förderwalzen und/oder Räder umfassen kann. Die Führung der Inmouldfolien kann durch vollflächig aufliegende Rollen oder Walzen erfolgen, oder durch ein oder mehrere miteinander gekoppelte eher punktuell auf der Inmouldfolie aufliegende Räder. Beispielsweise kann vorgesehen sein, dass die Inmouldfolie ausgehend von einer Rolle durch ein System von mehreren Walzen oder Rädern hindurchgeführt wird, bis sie zu der Robotervorrichtung gelangt. Dabei kann eine Horizontalführung, eine Vertikalführung oder eine abschnittsweise Horizontal- und Vertikalführung vorgesehen sein. Insbesondere kann die Inmouldfolie zunächst ausgehend von einer hochgelegenen Rolle mittels eines tiefergelegenen Rollen- oder Räderpaars abgewickelt und hiernach ggf. durch weitere Rollen- oder Räderpaare horizontal weitergeführt werden. Die Abnahmeposition durch die Robotervorrichtung kann eine horizontale Lage oder eine vertikale Lage der Inmouldfolie sein. In der Abnahmeposition, aber auch davor, kann die Inmouldfolie auf der der Robotervorrichtung gegenüber liegenden Seite rückseitig gegengestützt sein, beispielsweise durch eine Rückwand, eine Auflage oder durch ein Magazin, um der Manipulation durch die Robotervorrichtung rückseitig Halt zu geben.

Die Inmould-Folie in Form von Bandware, insbesondere Rollenware, kann in aufgewickelter Form auf einer Spindel oder Rolle vorliegen. Sie kann in einigen Ausführungsformen auch nochmals auf einem Trägermaterial, z. B. eine weitere Kunststofffolie angeordnet sein, von welcher sie im Schritt der Vereinzelung getrennt wird.

Die Robotervorrichtung kann sowohl einen Roboterarm als auch mehrere, zusammenwirkende Roboterarme aufweisen, deren Steuerung aufeinander abgestimmt ist. Zumindest ein Roboterarm der Robotervorrichtung ist dazu ausgebildet, die Inmould-Folien zu vereinzeln und weist hierzu entsprechende Vorrichtungen auf. Derselbe oder ein weiterer Roboterarm der Robotervorrichtung ist dazu ausgebildet, um die vereinzelte Inmould-Folie in eine Werkzeugbacke des Spritzgusswerkzeugs zur anschließenden Hinterspritzung einzulegen und weist hierzu weitere entsprechende Vorrichtungen auf.

Insbesondere kann zumindest ein Roboterarm der Robotervorrichtung eine Erkennungsvorrichtung aufweisen, die zum Beispiel Kameras, CCD-Leisten oder andere geeignete Sensoren umfasst, um die zu vereinzelnden Inmould-Folien zu identifizieren.

Des Weiteren kann zumindest ein Roboterarm der Robotervorrichtung einen Manipulierkopf aufweisen, der insbesondere Saug-, Greif-, Schneid-, Stanz- und/oder Spanvorrichtungen umfassen kann, um zu ermöglichen die Inmould- Folie zu vereinzeln. Dieser oder ein weiterer Manipulierkopf der Robotervorrichtung kann außerdem eingerichtet sein, z. B. mittels Gelenke und entsprechender Steuerung, um die vereinzelte Inmould-Folie zum Spritzgusswerkzeug zu überführen und im Spritzgusswerkzeug zu positionieren.

Die Werkzeugbacke des Spritzgusswerkzeugs kann einteilig oder mehrteilig ausgestaltet sein und sowohl flächige als auch eckige Bereiche umfassen. Sie kann sowohl eine Seitenwand des späteren Transportbehälters definieren, aber auch einen Eckbereich des Transportbehälters oder mehrere, z. B. auch umlaufende Seitenwände.

In einer vorteilhaften Ausführungsform ist im Schritt a) vorgesehen, dass die dem Spritzgusswerkzeug als Bandware zugeführten Inmould-Folien Außenkonturen mit Vorkonditionierungen in Form von Bereichen mit verringerten Foliendicken oder Öffnungen aufweisen.

Die Vorkonditionierungen bewirken zum Beispiel, dass die Außenkonturen von der Robotervorrichtung in einfacher Weise erkannt werden können. Beispielsweise kann vorgesehen sein, dass die Robotervorrichtung die Vorkonditionierungen durch optische Sensoren erkennt, z. B. durch eine Kamera, oder bei transparenten Folien z. B. durch eine konfokale Messeinrichtung. Alternativ kann vorgesehen sein, dass die Robotervorrichtung die Vorkonditionierungen durch Dickenbestimmung der Inmould-Folie, z. B. mittels berührungsloser Methoden, z. B. mittels induktiver oder kapazitiver Sensoren, oder mittels Abtastung erkennt.

In einer zweckmäßigen Weiterbildung vereinzelt die Robotervorrichtung im Schritt b) die Inmould-Folien mittels Vakuumsaugens oder mittels elektrostatischer Aufladung den Außenkonturen entsprechend. Vorteilhaft können die Vorkonditionierungen der Inmould-Folien und die Vakuumkanäle am Manipulierkopf der Robotervorrichtung derart ausgeführt und aufeinander abgestimmt sein, dass durch Anlegen des Vakuums die Inmould-Folie entsprechend ihrer Außenkontur vom Band getrennt wird. Alternativ oder zusätzlich kann vorgesehen sein, dass am Manipulierkopf der Robotervorrichtung ein elektrostatisches Feld angelegt wird, wobei die Inmould-Folie durch die statische Aufladung vom Band getrennt wird. Die Vorkonditionierungen können dabei insbesondere als dünne Filmscharniere oder als eine Perforation oder als ausgedehnte Öffnungen mit Stegen ausgebildet sein, die bei definierter Zugspannung reißen.

In einer Ausführungsform ist vorgesehen, dass im Schritt b) die Robotervorrichtung entsprechend vorgegebenen oder erkannten Außenkonturen die Inmould-Folien vereinzelt. Insbesondere kann vorgesehen sein, dass die Robotervorrichtung die Inmould-Folien ausstanzt oder ausschneidet.

Nach einer Ausführungsform werden vorkonditionierte, z. B. angestanzte Inmould-Folien von der Robotervorrichtung erkannt, beispielsweise mittels eines Grafikchips oder Dickenmessung, und diese dann von der Robotervorrichtung zu Ende ausgestanzt oder zu Ende ausgeschnitten. Alternativ kann auch vorgesehen sein, dass keine vorgestanzte oder angestanzte Inmould-Folie, sondern lediglich eine bedruckte Inmould-Folie als Bandware zugeführt wird, wobei die Außenkontur in Form einer Bedruckung vorliegt und die Robotervorrichtung die Bedruckung der Inmould-Folie mittels eines Grafikchips erkennt und entsprechend den erkannten Informationen entlang ihren Außenkonturen vereinzelt. Alternativ kann vorgesehen sein, dass die Robotervorrichtung entsprechend vorgegebenen Lage- und Abstandsdefinitionen die Inmould-Folien entlang ihren Außenkonturen vereinzelt.

Nach einer vorteilhaften Ausführungsform ist vorgesehen, dass im Schritt a) die dem Spritzgusswerkzeug als Bandware zugeführten Inmould-Folien innerhalb der Außenkontur gelegene Innenkonturen mit Vorkonditionierungen in Form von Bereichen mit verringerten Foliendicken oder Öffnungen aufweisen. Die innerhalb der Außenkontur gelegenen Innenkonturen können dabei sowohl alternativ als auch zusätzlich zu Außenkonturen mit Vorkonditionierungen vorliegen.

Weiterhin kann vorgesehen sein, dass die Robotervorrichtung innerhalb der Außenkontur gelegene Innenkonturen der Inmould-Folien zumindest teilweise anstanzt, ausstanzt, schneidet oder perforiert, um Vorkonditionierungen der Inmould-Folien auszubilden. Innenkonturen mit Vorkonditionierungen können also sowohl bereits bei der Zuführung der Inmould-Folien vorliegen als auch durch die Robotervorrichtung der Inmould-Folie beigebracht, d. h. erzeugt werden.

Beispielsweise ist es möglich, dass Durchgriffsöffnungen oder Sichtfenster des Transportbehälters in Form von Innenkonturen mit Vorkonditionierungen der Inmould-Folie vorliegen oder erzeugt werden. Weiterhin ist es möglich, dass Bereiche, die später im Transportbehälter einem Reliefelement oder einem invertierten Reliefelement des Transportbehälters zugeordnet sind, in Form von Innenkonturen mit Vorkonditionierungen vorliegen oder erzeugt werden.

In einer vorteilhaften Ausführungsform kann vorgesehen sein, dass die Robotervorrichtung Inselbereiche der Inmould-Folien entsprechend den Innenkonturen vereinzelt. Beispielsweise kann die Robotervorrichtung die Inselbereiche mittels Vakuumsaugen vereinzeln. Alternativ kann vorgesehen sein, die Inselbereiche mittels elektrostatischer Aufladung, Ausstanzung, Ausschneidung oder Perforation zu vereinzeln.

Insbesondere kann vorgesehen sein, dass nach dem Schritt b) des Vereinzelns der Inmould-Folien die Inmould-Folie entlang ihrer Außenkontur vom Band gelöst ist und dass zusätzlich ein oder mehrere innerhalb der Außenkontur gelegene Inselbereiche der Inmould-Folien vorliegen, die ihrerseits unabhängig von, oder mit anderen Worten unverbunden mit, dem durch die Außenkontur bestimmten Bereich der Inmould-Folie sind. Es kann vorgesehen sein, dass die Inselbereiche einzeln in die Werkzeugbacke des Spritzgusswerkzeugs eingelegt werden. Insbesondere kann also vorgesehen sein, dass beim Einlegen der Inmould-Folien mittels der Robotervorrichtung in die Werkzeugbacke des Spritzgusswerkzeugs weiterhin Innenkonturen mit Vorkonditionierungen in Form von Bereichen mit verringerten Foliendicken oder Öffnungen vorliegen, die zusammenhängend mit dem durch die Außenkontur bestimmten Bereich in das Spritzgusswerkzeug eingelegt werden, und dass weiterhin Inselbereiche vorliegen, die von der Robotervorrichtung vereinzelt in das Spritzgusswerkzeug eingelegt werden.

Es kann zum Beispiel vorgesehen sein, dass die Robotervorrichtung solche als Durchgriffsöffnungen oder Sichtfenster vorliegende Vorkonditionierungen vereinzelt und solche dem Reliefelement oder invertierten Reliefelement zugeordneten Vorkonditionierungen nicht vereinzelt oder umgekehrt. Es kann auch vorgesehen sein, dass die Robotervorrichtung sämtliche Innenkonturen mit Vorkonditionierungen als Inselbereiche vereinzelt oder sämtliche Innenkonturen mit Vorkonditionierungen nicht vereinzelt.

In einer beispielhaften Ausgestaltung des Verfahrens vereinzelt die Robotervorrichtung eine Inmould-Folie mittels Vakuumsaugen entsprechend ihrer Außenkontur vom Band und vereinzelt darüber hinaus eine Durchgriffs- oder eine Sichtöffnung des Transportbehälters mithilfe einer weiteren Vakuumkante in Bezug auf die vereinzelte Inmould-Folie, sodass zwei disjunkte Inmould-Folienbereiche bestehen. Beim Einlegen der Inmould-Folie in das Spritzgusswerkzeug wird der durch die Außenkontur bestimmte Bereich der Inmould-Folie von einer beim Spritzgusswerkzeug vorgesehenen Vakuumkante an der Werkzeugbacke festgehalten und von der Robotervorrichtung losgelassen. Im Bereich des Sichtfensters bzw. der Durchgriffsöffnung ist dagegen beispielsweise keine Vakuumkante in der Werkzeugbacke vorgesehen, sodass die Robotervorrichtung auch nach dem Einlegen der Inmould-Folie diesen Inselbereich weiterhin per Vakuum festhält und wieder aus dem Spritzgusswerkzeug entfernt. Der Inselbereich der Inmould-Folie wird als Ausschussware entfernt.

In einer weiteren beispielhaften Ausgestaltung des Verfahrens vereinzelt die Robotervorrichtung eine Inmould-Folie mittels Vakuumsaugen entsprechend ihrer Außenkontur vom Band und vereinzelt darüber hinaus mithilfe einer weiteren Vakuumkante einen Bereich der Inmould-Folie, welcher für ein Reliefelement oder invertiertes Reliefelement vorgesehen ist, in Bezug auf die vereinzelte Inmould-Folie, sodass zwei disjunkte Inmould-Folienbereiche bestehen. Beim Einlegen der Inmould-Folie in das Spritzgusswerkzeug wird der durch die Außenkontur bestimmte Bereich der Inmould-Folie von der Robotervorrichtung losgelassen und von einer beim Spritzgusswerkzeug vorgesehenen Vakuumkante an der Werkzeugbacke festgehalten. Im Bereich des Reliefelements oder invertierten Reliefelements ist eine eigene Vakuumkante in der Werkzeugbacke vorgesehen. Beim Einlegen der Inmould-Folie in das Spritzgusswerkzeug wird der durch die Innenkontur bestimmte Inselbereich der Inmould-Folie von der Robotervorrichtung losgelassen und von der beim Spritzgusswerkzeug vorgesehenen Vakuumkante an der Werkzeugbacke festgehalten.

Gemäß einer vorteilhaften Ausführungsform des Verfahrens weist die Werkzeugbacke des Spritzgusswerkzeugs eine Werkzeugbackengrundfläche und zumindest ein bezüglich der Werkzeugbackengrundfläche erhaben ausgebildetes Werkzeugbackenreliefelement oder zumindest ein bezüglich der Werkzeugbackengrundfläche vertieft ausgebildetes invertiertes Werkzeugbackenreliefelement auf. Dabei ist vorgesehen, dass eine Inmould-Folie im Schritt c) derart in das Spritzgusswerkzeug eingelegt wird, dass sie nach der Hinterspritzung einen ersten Bereich aufweist, in dem die Inmould-Folie zumindest teilweise eine der Werkzeugbackengrundfläche entsprechende Grundfläche des Transportbehälters bedeckt, und einen zweiten Bereich, in dem die Inmould-Folie ein dem Werkzeugbackenreliefelement oder dem invertierten Werkzeugbackenreliefelement entsprechendes invertiertes Reliefelement oder Reliefelement des Transportbehälters bedeckt.

Auf diese Weise kann ein Transportbehälter mit einer Inmould-Folie bereitgestellt werden, welche zumindest teilweise die Grundfläche und das Reliefelement oder das invertierte Reliefelement bedeckt.

Bei einer vorteilhaften Ausführungsform kann vorgesehen sein, dass zumindest eine Innenkontur der Inmould-Folie einem Übergangsbereich vom ersten Bereich zum zweiten Bereich entspricht. Vorteilhaft ist im Übergangsbereich also eine Vorkonditionierung in Form von einem Bereich mit einer verringerten Foliendicke oder einer Öffnung vorgesehen. Die Vorkonditionierung kann dabei durch die Robotervorrichtung erzeugt worden sein oder aber bereits Zuführung als Bandware, insbesondere Rollenware, vorgelegen haben.

Gemäß einer weiteren Ausführungsform umfasst das Verfahren den weiteren Schritt des
d) Festhaltens der Inmould-Folie in der Position bei der Hinterspritzung durch zumindest eine Vakuumkante oder elektrostatische Aufladung.

Als Vakuumkante werden zum Beispiel linienförmige Bereiche der Werkzeugbacke oder der Robotervorrichtung bezeichnet, an denen ein Unterdruck erzeugt wird.

Vorteilhaft ist die Steuerung der Robotervorrichtung mit der Steuerung des Spritzgusswerkzeugs derart abgestimmt, dass die Übergabe der Inmould-Folie am Spritzgusswerkzeug aufeinander abgestimmt ist. Beispielsweise kann die Steuerung des Vakuums an der Robotervorrichtung mit der Steuerung des Vakuums an dem Spritzgusswerkzeug derart abgestimmt sein, dass in dem Moment, wenn die Robotervorrichtung die Inmould-Folie in der benötigten Position in die Werkzeugbacke des Spritzgusswerkzeugs eingelegt hat, die Vakuumkante des Spritzgusswerkzeugs aktiviert und die Vakuumkante der Robotervorrichtung deaktiviert wird, sodass die Inmould-Folie in der benötigten Position vom Spritzgusswerkzeug festgehalten wird. Entsprechend kann vorgesehen sein, die elektrostatische Aufladung der Robotervorrichtung und des Spritzgusswerkzeugs aufeinander abzustimmen. Alternativ kann auch vorgesehen sein, eine durch Vakuum festgehaltene Inmould-Folie an der Robotervorrichtung durch eine elektrostatische Aufladung am Spritzgusswerkzeug in der Position zu halten, oder umgekehrt, und eine entsprechende Steuerung zur Übergabe vorzusehen.

Gemäß einer Ausführungsform ist für die Grundfläche zumindest eine Vakuumkante vorgesehen. In einer vorteilhaften Ausführungsform sind lediglich an dem der Grundfläche entsprechenden Werkzeugbackenabschnitt Vakuumkanten vorgesehen, um den ersten Bereich der Inmould-Folie festzuhalten. Der zweite Bereich der Inmould-Folie kann dabei durch einen oder mehrere Stege in der gewünschten Position festgehalten werden. Alternativ können auch an dem dem Reliefelement oder dem invertierten Reliefelement entsprechenden Werkzeugbackenabschnitt Vakuumkanten vorgesehen sein, die den zweiten Bereich der Inmould-Folie in der Position festhalten. Beispielsweise kann in dieser Ausführungsform die Inmould-Folie auch ohne Stege zwischen dem ersten und dem zweiten Bereich ausgestaltet sein.

Gemäß einer Ausführungsform ist für ein Reliefelement oder invertiertes Reliefelement zumindest eine eigene Vakuumkante vorgesehen. Beispielsweise kann für jedes Reliefelement oder invertiertes Reliefelement eine eigene Vakuumkante vorgesehen sein. Es kann auch vorgesehen sein, für mehrere Reliefelemente eine gemeinsame Vakuumkante im Spritzgusswerkzeug vorzusehen. Weiterhin kann vorgesehen sein, für Reliefelemente, die flächenmäßig eine bestimmte Mindestausdehnung aufweisen, eine eigene Vakuumkante im Spritzgusswerkzeug vorzusehen.

Gemäß einer weiteren Ausführungsform werden beim Zuführen der Inmould-Folien im Schritt a) diese durch ein Walzenpaar mit zwei ineinandergreifenden Walzen mit strukturierter Oberfläche durchgeführt, wobei zumindest abschnittsweise eine Strukturierung auf den Inmould-Folien erzeugt wird, die einem Matteffekt entspricht, was weiter unten näher erläutert wird.

Bei einem erfindungsgemäßen Verfahren zur Herstellung eines Transbehälters mit zumindest einer Inmould-Folie wird zumindest eines der zuvor beschriebenen Arbeitsverfahren der Spritzgussanlage ausgeführt.

Beim Hinterspritzen der Inmould-Folie verbindet sich die Inmould-Folie mit einem den Behältergrundkörper bildenden Kunststoffmaterial. Insbesondere werden dabei der erste Bereich der Inmould-Folie mit der Grundfläche und der zweite Bereich der Inmould-Folie mit dem Reliefelement oder invertierten Reliefelement verbunden.

Vorteilhaft kann vorgesehen sein, dass für den Fall, dass zumindest eine Innenkontur der Inmould-Folie in einem Übergangsbereich vom ersten Bereich zum zweiten Bereich eine Vorkonditionierung aufweist, während des Hinterspritzens sich eine wohldefinierte Ausgleichsaussparung in der Inmould-Folie ausbildet.

Bei einem derart hergestellten Transportbehälter, insbesondere Flaschenkasten zur Aufnahme von Getränkeflaschen oder Flaschengebinden, umfassend einen Behältergrundkörper, der einen Boden und vier Seitenwände aufweist, kann vorteilhaft vorgesehen sein, dass zumindest eine der Seitenwände eine Grundfläche und zumindest ein bezüglich der Grundfläche erhaben ausgebildetes Reliefelement oder zumindest ein bezüglich der Grundfläche vertieft ausgebildetes invertiertes Reliefelement aufweist, wobei die Seitenwand zumindest eine zumindest teilweise jeweils die Grundfläche und das Reliefelement oder das invertierte Reliefelement bedeckende Inmould-Folie aufweist, und wobei die Inmould-Folie einen der Grundfläche zugeordneten ersten Bereich aufweist und einen dem Reliefelement oder invertierten Reliefelement zugeordneten zweiten Bereich. Insbesondere kann vorgesehen sein, dass die Inmould-Folie in einem Übergangsbereich vom ersten Bereich zum zweiten Bereich zumindest eine wohldefinierte Ausgleichsaussparung aufweist.

"Wohldefiniert" bezeichnet entweder die Form oder die Größe oder auch Form und Größe der Ausgleichsaussparung. Die wohldefinierte Ausgleichsaussparung der Inmould-Folie ist insbesondere dahingehend wohldefiniert, dass sie in einem Vorverarbeitungsschritt der Inmould-Folie vor dem Hinterspritzen der Inmould-Folie im Spritzgusswerkzeug in Form und Größe festgelegt wird. Die wohldefinierte Ausgleichsaussparung ist also durch eine Vorkonditionierung der Inmould-Folie angelegt. Die Vorkonditionierung der Inmould-Folie stellt sicher, dass sich nach dem Spritzgießen die wohldefinierte Ausgleichsaussparung in gewünschter Form und Größe an der gewünschten Stelle befindet, nämlich im Übergangsbereich vom ersten Bereich zum zweiten Bereich der Inmould-Folie.

Die Vorkonditionierung bewirkt dabei vorteilhaft, dass während des Spritzgießens im Übergangsbereich vom ersten zum zweiten Bereich der Druck auf die Inmould-Folie verringert wird, sodass gezielt einem undefinierten Reißen der Inmould-Folie und einem damit verbundenen Verzerren der Bedruckungen im Bereich des Reliefelements oder des invertierten Reliefelements entgegengewirkt wird. Der Transportbehälter erhält hierdurch einen gefälligeren, da wohldefinierten optischen Eindruck.

Gemäß einer Ausführungsform ist die wohldefinierte Aussparung durch einen Bereich mit verringerter Foliendicke ausgebildet. Bei der Zuführung der Inmould-Folie zum Spritzgusselement ist hierzu eine Vorkonditionierung in Form eines Bereichs mit verringerter Foliendicke angelegt oder wird durch die Robotervorrichtung wie zuvor beschrieben ausgebildet. Während des Spritzgießens wird der Bereich mit verringerter Foliendicke gedehnt, sodass nach dem Spritzguss weiterhin ein Bereich mit verringerter Foliendicke vorliegt, ohne dass in diesem Bereich die Inmould-Folie gerissen ist.

Gemäß einer alternativen Ausführungsform ist die wohldefinierte Ausgleichsaussparung durch eine Öffnung in der Inmould-Folie ausgebildet. Die Öffnung in der Inmould-Folie kann zum Beispiel aus einer bereits bei der Zuführung der Inmould-Folie zum Spritzgusselement als entsprechende Vorkonditionierung der Inmould-Folie vorhandenen Öffnung entstanden sein. Alternativ kann vorgesehen sein, dass die Öffnung durch ein wohldefiniertes Reißen einer Vorkonditionierung in Form eines Bereichs mit verringerter Foliendicke entsteht.

Für den Fall, dass die Öffnung in der Inmould-Folie bereits beim Einlegen der Inmould-Folie in das Spritzgusswerkezeug als Vorkonditionierung vorhanden ist, kann sich die Öffnung während des Spritzgießens aufgrund der auf die Folie wirkenden Drücke vergrößern oder mit anderen Öffnungen verbinden, wobei dieses ein Vorgang ist, der zu einer wohldefinierten Ausgleichsaussparung im Sinne der Erfindung führt. Vorteilhaft wird dabei ausgenutzt, dass die Öffnung beispielsweise in eine Richtung senkrecht zum Zug reißen wird, oder in eine Richtung reißen wird, in der sich eine nahegelegene weitere Öffnung befindet.

Die Folie kann also während des Spritzgießens reißen, wobei sich das Reißen vorteilhaft auf den durch die Vorkonditionierung definierten Bereich beschränkt, d. h. räumlich im Bereich der Vorkonditionierung erfolgt und durch diese bestimmt wird.

Die Vorkonditionierung in Form des Bereichs mit verringerter Foliendicke kann beispielsweise durch eine Anstanzung oder durch eine Ausspanung gebildet sein. Insbesondere kann sie einen Filmscharnierbereich umfassen.

Die Vorkonditionierung in Form der Öffnung auch kann durch eine Stanzung gebildet sein. Alternativ kann die Vorkonditionierung in Form der Öffnung durch eine Perforation gebildet sein, wobei hiermit eine Vielzahl von Löchern entlang einer vorgegebenen Linie gemeint ist. Weiter alternativ kann die Vorkonditionierung durch einen Schnitt gebildet sein.

Für den Fall, dass die Inmould-Folie das Reliefelement oder das invertierte Reliefelement vollständig bedeckt, kann vorgesehen sein, dass die wohldefinierte Ausgleichsaussparung das Reliefelement oder das invertierte Reliefelement vollständig umgibt. Alternativ kann vorgesehen sein, dass die wohldefinierte Ausgleichsaussparung das Reliefelement oder das invertierte Reliefelement teilweise umgibt.

Gemäß einer Ausführungsform weist die Inmould-Folie im Übergangsbereich vom ersten Bereich zum zweiten Bereich Stege auf, die den ersten Bereich und den zweiten Bereich miteinander verbinden. Durch die Stege wird der erste Bereich der Inmould-Folie mit dem zweiten Bereich der Inmould-Folie vorteilhaft derart miteinander verbunden, dass das Druckbild der Inmould-Folie, welches das Reliefelement oder invertierte Reliefelement überdeckt, auf diesem gezielt platziert werden kann, ohne dass es zu einem ungewollten seitlichen Versatz kommt. Die Stege sind bevorzugt von 50 µm bis 1 mm breit ausgebildet. Hierdurch wird der Eindruck, der sich durch das Vorhandensein der Stege auf den Übergangsbereich ergibt, möglichst wenig geprägt.

Für den Fall, dass eine Perforation vorgesehen ist, sind der erste und der zweite Bereich an einer Vielzahl von Stellen, beispielsweise an mehr als zwanzig Stellen, miteinander verbunden.

Alternativ ist vorgesehen, dass der erste und zweite Bereich an weniger als zehn Stellen, weniger als fünf Stellen, an vier, drei, insbesondere an zwei Stellen, an einer Stelle oder an keiner Stelle miteinander verbunden sind. Hierdurch wird vorteilhaft der optische Eindruck des Übergangsbereiches, in welchem also das Reliefelement sich erhebt bzw. das invertierte Reliefelement sich versenkt, an nur sehr wenigen Stellen oder gar an keiner Stelle durch die Stege beeinflusst.

Vorteilhaft ist das Reliefelement oder das invertierte Reliefelement mehr als 0,5 mm, bevorzugt mehr als 1 mm, weiter bevorzugt mehr als 1,5 mm, noch weiter bevorzugt mehr als 2 mm und insbesondere von 2 mm bis 5 mm, von 2 mm bis 4 mm oder von 2 mm bis 3 mm gegenüber der Grundfläche erhaben oder vertieft ausgebildet. Durch die wohldefinierten Ausgleichsaussparungen kann das Reliefelement oder das invertierte Reliefelement ein wesentlich stärkeres Profil, d.h. eine größere maximale Versatzhöhe aufweisen als bei bisherigen Inmould-Folien, ohne dass der optische Eindruck des Druckbildes auf der Inmould-Folie in den zweiten Bereichen, in denen die Inmould-Folie die Reliefelemente bzw. invertierten Reliefelemente überdeckt, beeinträchtigt wird. Das Reliefelement oder invertierte Reliefelement kann z. B. einen Buchstaben undloder ein Symbol, ein Logo, eine Marke oder auch einen Werbeschriftzug umfassen.

Für den Fall, dass der Transportbehälter einen Stoßrand oder Stoßleisten aufweist, ist bevorzugt vorgesehen, dass die erhaben ausgebildeten Reliefelemente im Vergleich zu dem Stoßrand oder den Stoßleisten weniger stark erhaben gegenüber der Grundfläche der Seitenwand ausgebildet sind.

Im typischen Fall sind eine Vielzahl oder sämtliche Reliefelemente und/oder invertierten Reliefelemente, die auf dem Transportbehälter vorgesehen sind, mit einer oder mehreren Inmould-Folien bedeckt. In diesem Fall können vorteilhaft entlang den Konturen sämtlicher Reliefelemente oder invertierter Reliefelemente eine Vielzahl von Vorkonditionierungen vorgesehen sein, sodass die Inmould-Folie in den ersten Bereichen, in welchen sie die Grundfläche überdeckt, und in den zweiten Bereichen, in welchen sie die Reliefelemente oder invertierten Reliefelemente überdeckt, nicht unkontrolliert reißt.

Gemäß einer Ausführungsform weist die Inmould-Folie eine Lackschicht auf. Bei lackierten Inmould-Folien, die vor dem Hinterspritzen bereits eine Lackschicht aufweisen, ist es bisher nicht gelungen, diese auf Seitenwänden mit Reliefelementen oder invertierten Reliefelementen anzuordnen. Wohldefinierte Ausgleichsaussparungen in den Übergangsbereichen verhindern vorteilhaft, dass die Lackschicht beim Hinterspritzen platzt oder reißt, sodass mit der vorliegenden Erfindung völlig neue Gestaltungsmöglichkeiten des Transportbehälters vorliegen.

Gemäß einer alternativen Ausführungsform weist die Inmould-Folie eine Kaschierung auf. Bei kaschierten Inmould-Folien, die vor dem Hinterspritzen bereits eine Kaschierung aufweisen, ist bisher nicht gelungen, diese auf Seitenwänden mit Reliefelementen anzuordnen, welche mehr als 2 mm erhaben, bzw. mit invertierten Reliefelementen, welche mehr als 2 mm vertieft ausgebildet sind. Wohldefinierte Ausgleichsaussparungen in den Übergangsbereichen verhindern vorteilhaft, dass es beim Spritzgussvorgang zu einem Bruch der Kaschierung kommt, sodass mit der vorliegenden Erfindung völlig neue optische Eindrücke des Transportbehälters ermöglicht werden.

Die Inmould-Folie kann teilweise oder vollständig einen Matteffekt aufweisen. Es kann insbesondere auch vorgesehen sein, dass die Inmould-Folie nur im ersten Bereich oder nur im zweiten Bereich einen Matteffekt aufweist. Insbesondere kann vorgesehen sein, dass die Inmould-Folie im ersten Bereich matt ausgeführt ist und im zweiten Bereich hochglänzend oder umgekehrt.

Ein Matteffekt der Inmould-Folie kann beispielsweise durch eine Strukturierung erzeugt werden, welche im Spritzvorgang durch Einprägung einer auf der Werkzeugbacke befindlichen Struktur herbeigeführt wird. Strukturen, deren Körnung in etwa einem 250er Korn mit Strukturgrößen von 10 µm bis 80 µm entspricht, führen dabei zu einer matt wirkenden Fläche der Inmould-Folie. Extrem glatte Abschnitte der Grundfläche hingegen erzeugen eine Glanzoptik in der Inmould-Folie. Geeignete auf der Werkzeugbacke befindliche Strukturen sind beispielsweise Erodierungen, insbesondere Erodierungen gemäß VDI-Normen wie z. B. VDI 36. Alternative geeignete auf der Werkzeugbacke befindliche Strukturen können gebürstete, genarbte, geätzte, undloder gefräste Strukturen in entsprechender Korngröße umfassen.

Der Matteffekt kann sich auch bereits vor dem Spritzguss inhärent in oder auf der Inmould-Folie befinden. Der Matteffekt kann z. B. durch Verwenden einer transluzenten Inmould-Folie mit strukturierter Oberfläche entstehen und/oder durch einen Farbaufdruck oder Auftrag eines Lacks. Die Strukturierung der Oberfläche kann beispielsweise mittels Durchführen der Inmould-Folie durch ein Walzenpaar erzeugt werden, wobei zwei ineinandergreifende Druck ausübende Walzen mit strukturierter Oberfläche die transluzente Folie von beiden Seiten verformen und dadurch eine doppelte Tiefe (z.B. -0,5 mm) bzw. Erhöhung (z.B. +0,5 mm) ohne eine Überdehnung der Folie erzeugen. In vorteilhaften Ausführungsformen kann die Walze auch derart gestaltet sein, dass strukturierte und unstrukturierte Flächen nebeneinander liegen.

Die Grundfläche kann glatt ausgeführt sein oder eine insbesondere gebürstete, erodierte, genarbte, geätzte, strichpolierte, hochglanzpolierte und/oder gefräste 3D-Hintergrundstruktur aufweisen. Die 3D-Hintergrundstruktur kann beispielsweise weniger als 1 mm, insbesondere als 0,5 mm erhaben und/oder vertieft ausgebildete Merkmale umfassen. Die 3D-Hintergrundstruktur kann dabei insbesondere flächenartige Bestandteile umfasst, welche z. B. natürlichen und/oder industriellen Oberflächenstrukturen nachempfunden sind, beispielsweise Holz-Maserungsstrukturen, Stein- oder Granitmuster, Riffelblechoberflächen oder dergleichen.

Es kann vorgesehen sein, dass jede Seite des Transportbehälters mit mindestens einer Inmould-Folie versehen ist. Auch Inmould-Folien, welche um eine Kante oder Ecke des Transportbehälters herum verlaufen, sind möglich.

Gemäß einer Ausführungsform ist vorgesehen, dass die Seitenwand zwei zumindest teilweise übereinander angeordnete zumindest teilweise jeweils die Grundfläche und das Reliefelement oder das invertierte Reliefelement bedeckende Inmould-Folien aufweist, wobei eine oder beide der Inmould-Folien im Übergangsbereich vom ersten Bereich zum zweiten Bereich zumindest eine wohldefinierte Ausgleichsaussparung aufweisen. Dabei kann vorgesehen sein, dass die Seitenwand zwei vollflächig aufeinander liegende Inmould-Folien aufweist oder zwei Inmould-Folien, welche sich nur teilweise überlappen.

Gemäß einer Ausführungsform weisen beide Inmould-Folien wohldefinierte Ausgleichsaussparungen auf, wobei die wohldefinierten Ausgleichsaussparungen übereinander angeordnet sind.

Insbesondere kann vorgesehen sein, dass eine oder beide Inmould-Folien eine Kaschierung oder Lackierung aufweisen und wohldefinierte Ausgleichsaussparungen aufweisen, um eine Beeinträchtigung der Lackschicht oder der Kaschierung zu verhindern.

Vorteilhaft ist es mit den Maßnahmen möglich, zwei Inmould-Folien übereinander zu platzieren, wobei diese zum Beispiel auch unterschiedlich gestaltet sein können. Zum Beispiel kann vorgesehen sein, dass eine der Inmould-Folien matt und die andere der Inmould-Folien hochglänzend ausgeführt ist.

Eine Inmould-Folie zur Verwendung in einem zuvor beschriebenen Transportbehälter weist zumindest eine Vorkonditionierung in einem Übergangsbereich vom ersten Bereich zum zweiten Bereich auf.

Die Inmould-Folie weist beispielsweise eine Dicke von 5 µm bis 190 µm auf. Insbesondere kann die Inmould-Folie eine Dicke von 60 µM bis 110 µm aufweisen.

Als Inmould-Folie kann insbesondere eine PE-Folie (Polyethylenfolie), PP-Folie (Polypropylenfolie) oder eine PET-Folie (Polyethylentherephthalat-Folie) als eine Grundfolie zum Einsatz kommen, welche einseitig oder beidseitig bedruckt sein kann, um eine Farbe und/oder Information in gewünschter Darstellung zu erhalten. Die Bedruckung der Inmould-Folie kann beispielsweise mit einem Offsetdruck und/oder mit einem Flexodruck und/oder mit einem Tiefdruck und/oder mit einem Digitaldruck und/oder mit einem Siebdruck erfolgen. Bei einem Offsetdruck kann vorgesehen sein, nur den Bereich mit einem Grundweiß-Farbdruck zu versehen, an dem sich gedruckte Information, z. B. Buchstaben oder Logos befindet.

In einer Ausführungsform ist eine Inmould-Folie vorgesehen, bei welcher die Grundfolie auf der dem Behältergrundkörper zugewandten Seite eine erste Bedruckung aufweist und auf der dem Behältergrundkörper abgewandten Seite eine zweite Bedruckung aufweist. Insbesondere kann vorgesehen sein, dass Form und Farbe der ersten Bedruckung und der zweiten Bedruckung einander entsprechen. Für den Fall, dass die Inmould-Folie oberflächlich angekratzt wird, dass also die Kaschierung der Folie und beispielsweise die zweite Druckschicht beeinträchtigt werden, kann die erste Druckschicht den optischen Effekt vorteilhaft aufrechterhalten, sodass dem Verbraucher der Defekt nicht auffällt.

Gemäß einer Ausführungsform ist die Grundfolie der Inmould-Folie transluzent in der Farbe des Behältergrundkörpers eingefärbt. Weiterhin ist die Grundfolie der Inmould-Folie vorzugsweise mit Wärme- und Lichtstabilisatoren (HALS-Stabilisatoren) ausgerüstet.

Auf der Grundfolie kann sich inhärent ein Matteffekt befinden. Der Matteffekt kann z. B. durch eine transluzente Inmouldfolie mit strukturierter Oberfläche erzeugt sein undloder durch einen Farbaufdruck oder Auftrag eines Lacks. Die strukturierte Oberfläche kann beispielsweise mittels Durchführen der Grundfolie oder Inmould-Folie durch ein Walzenpaar erzeugt werden, wobei zwei ineinandergreifende Druck ausübende Walzen mit strukturierter Oberfläche die transluzente Folie von beiden Seiten verformen und dadurch eine doppelte Tiefe (z.B. -0,5 mm) bzw. Erhöhung (z.B. + 0,5 mm) ohne eine Überdehnung der Folie erzeugen. In vorteilhaften Ausführungsformen kann die Walze auch derart gestaltet sein, dass strukturierte und unstrukturierte Flächen nebeneinander liegen.

Die PE-, PP-oder PET-Grundfolie ist in einer vorteilhaften Ausführungsform mit einer Kaschierung oder mit einer Schutzlackschicht versehen. Auch laminierte Inmould-Folien, bei welchen die Grundfolie in eine Art Hülle aufgenommen ist, sind möglich. Derartige Kaschierungen und auch Schutzlacke helfen, die Druckschichten der Grund-Folie gegen Beschädigungen, beispielsweise durch vorbeikratzende Bestandteile einer Transportvorrichtung, durch Stapelung und Palettierung mit anderen Transportbehältern oder im alltäglichen Gebrauch zu schützen. Unter einer kaschierten Folie wird eine Folie verstanden, bei welcher die Grundfolie mit einer Kunststoff-Schutzschicht überzogen ist die ggf. noch eine haftvermittelnde Unterseite aufweisen kann. Insbesondere kann die Kaschierung durch eine PET-Klarsichtfolie realisiert sein. Die Kaschierung kann alternativ auch durch eine PP-Folie erfolgen. Insbesondere kann eine transparente Folie vorgesehen sein. Bei Ausführungsformen, in denen ausschließlich aus PE oder PP hergestellte IML-Folien eingesetzt werden, ist darüber hinaus vorteilhaft ein Recycling des Transportbehälters ohne sogenanntes downcycling möglich. In einigen Ausführungsformen kann die Kaschierung der Inmould-Folie außerdem mit Wärme- und Lichtstabilisatoren (HALS-Stabilisatoren) ausgerüstet sein. Die Kaschierung oder die Schutzlackschicht können ebenfalls bedruckt sein.

Nach einem weiteren Aspekt umfasst eine Spritzgussanlage zur Herstellung von Transportbehältern mit Inmould-Folien, insbesondere Flaschenkästen zur Aufnahme von Getränkeflaschen oder Flaschengebinden, zumindest eine Robotervorrichtung und ein Spritzgusswerkzeug, die eingerichtet sind, um eines der zuvor beschriebenen Verfahren durchzuführen.

Die zuvor mit Bezug zu den Verfahren beschriebenen Merkmale der Spritzgussanlage gelten selbstverständlich auch in Bezug auf die Spritzgussanlage als offenbart. Dies betrifft insbesondere die Ausgestaltung der Robotervorrichtung, des Spritzgusswerkzeugs und der Steuerung hierzu.

### Kurze Beschreibung der Figuren

In den Figuren sind mögliche Ausführungsbeispiele der Erfindung dargestellt.

Es zeigen
Figur 1 eine Seitenansicht eines Transportbehälters gemäß einer Ausführungsform der Erfindung,
Figur 2 eine Draufsicht auf eine Inmould-Folie gemäß einer Ausführungsform der Erfindung,
Figur 3 eine vergrößerte Ansicht des in Figur 2 dargestellten Bereichs A gemäß einer Ausführungsform der Erfindung,
Figur 4 eine vergrößerte Ansicht des in Figur 2 dargestellten Bereichs A gemäß einer weiteren Ausführungsform der Erfindung,
Figur 5 eine vergrößerte Ansicht des in Figur 4 dargestellten Bereichs B gemäß einer Ausführungsform der Erfindung,
Figur 6 eine Schnittansicht entlang der in Figur 1 dargestellten Linie C-C gemäß einer Ausführungsform der Erfindung,
Figur 7 eine Schnittansicht entlang der in Figur 1 dargestellten Linie C-C gemäß einer weiteren Ausführungsform der Erfindung,
Figur 8 eine Schnittansicht durch einen Teil einer Inmould-Folie gemäß einer Ausführungsform der Erfindung,
Figur 9 eine Schnittansicht durch einen Teil einer Inmould-Folie gemäß einer weiteren Ausführungsform der Erfindung,
Figur 10 eine Schnittansicht durch einen Teil einer Inmould-Folie gemäß einer noch weiteren Ausführungsform der Erfindung,
Figur 11 eine Schnittansicht durch einen Teil zweier übereinander angeordneter Inmould-Folien gemäß einer Ausführungsform der Erfindung,
Figur 12 eine Schnittansicht durch einen Teil zweier übereinander angeordneter Inmould-Folien gemäß einer weiteren Ausführungsform der Erfindung,
Figur 13 eine Schnittansicht durch einen Teil zweier übereinander angeordneter Inmould-Folien gegenüber einer noch weiteren Ausführungsform der Erfindung und
Figur 14 einen schematischen Aufbau einer Spritzgussanlage gemäß einer Ausführungsform der Erfindung.

### Ausführungsformen der Erfindung

Die im Folgenden mit Bezug zu den Figuren beschriebenen Ausführungsbeispiele sind für den Gegenstand der Erfindung nicht als einschränkend aufzufassen.

In den Figuren sind gleiche oder ähnliche Komponenten mit gleichen Bezugszeichen versehen, wobei in der Beschreibung in Einzelfällen auf eine wiederholte Nennung dieser Komponenten verzichtet wird. Die Figuren stellen den Gegenstand der Erfindung nur schematisch dar.

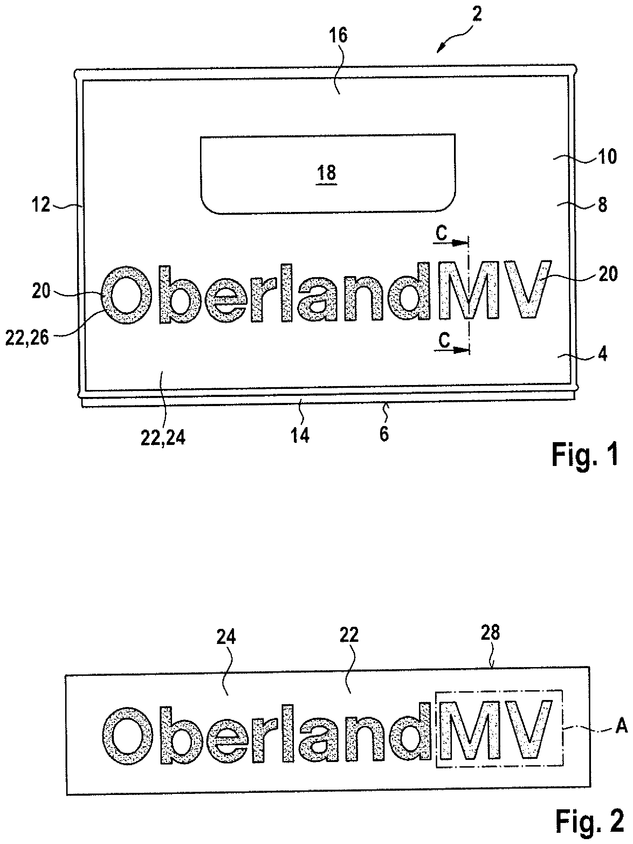

Figur 1 zeigt eine Seitenansicht eines Transportbehälters 2 gemäß einer Ausführungsform der Erfindung.

Der Transportbehälter 2 umfasst einen Behältergrundkörper 4, der einen Boden 6 und vier umlaufende Seitenwände 8 aufweist, wovon eine Seitenwand 8 dargestellt ist.

Die Seitenwand 8 umfasst eine Grundfläche 10 und einen Stoßrand 12. Der Stoßrand 12 ist umlaufend um die Seitenwand 8 herum ausgebildet. Durch den Stoßrand 12 werden sowohl die Grundfläche 10 als auch die Reliefelemente 20 vor etwaigem Abrieb im Gebrauch geschützt. In alternativen Ausführungsformen (nicht dargestellt) können an der Seitenwand 8 auch nur oberseitig und unterseitig beispielsweise Stoßleisten vorgesehen.

Am Boden 6 des Transportbehälters 2 ist ein Stapelrand 14 vorgesehen, welcher aufeinander gestapelten Transportbehältern 2 Stabilität verleiht.

Im oberen Bereich der Seitenwand 8 ist eine Durchgriffsöffnung 18 vorgesehen, die oberseitig durch eine Griffleiste 16 begrenzt ist. Der Transportbehälter 2 wird bevorzugt an Griffleisten 16 gegenüberliegend angeordneter Seitenwände 8 getragen. Von der Erfindung sind auch Ausführungsformen von Transportbehältern 2 umfasst, bei denen die Durchgriffsöffnungen 18 große Sichtfenster bilden, um die Sicht auf die darin befindlichen Güter, zum Beispiel Flaschen, zu ermöglichen.

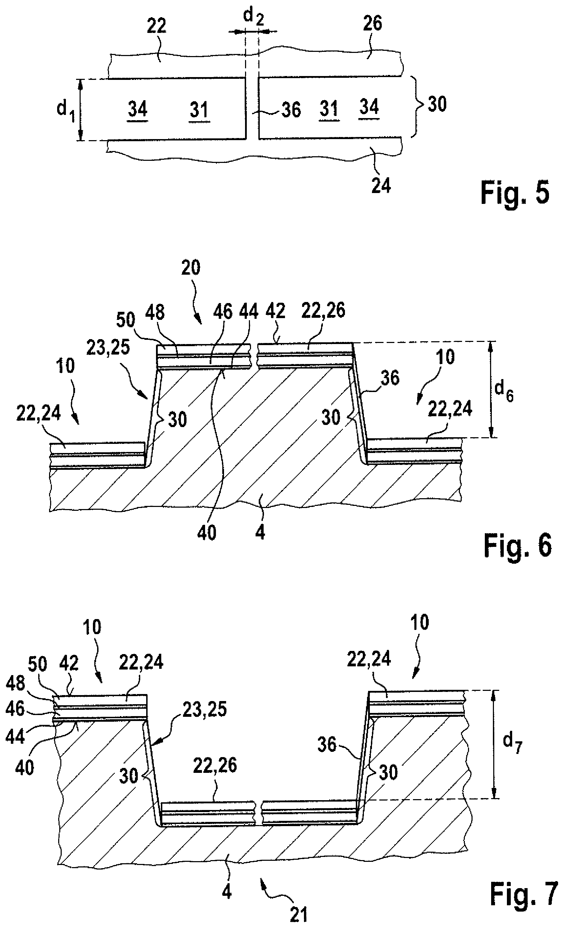

Der Behältergrundkörper 4 weist außerdem Reliefelemente 20 auf, die im dargestellten Ausführungsbeispiel die Marke "Oberland MV" bilden. Jeder Buchstabe ist dabei durch ein einzelnes Reliefelement 20 gebildet, welches gegenüber der Grundfläche 10 erhaben ausgebildet ist, d.h. bezüglich dieser um mehr als 0,5 mm, bevorzugt von 2 mm bis 3 mm aus der Bildebene heraus hervorsteht. In alternativen Ausführungsformen können anstelle von Reliefelementen 20 entsprechend auch invertierte Reliefelemente 21 (vgl. Fig. 7) mit derartigen Abmessungen vorgesehen sein. Es kann auch vorgesehen sein, dass einige der Buchstaben als Reliefelemente 20 ausgebildet sind und einige andere der Buchstaben als invertierte Reliefelemente 21 ausgebildet sind.

Die Grundfläche 10 des Transportbehälters 2 kann glatt ausgebildet sein oder auch eine dreidimensionale Hintergrundstruktur aufweisen. Die dreidimensionale Hintergrundstruktur ist dabei weniger erhaben und/oder vertieft ausgebildet als die Reliefelemente 20, beispielsweise mit weniger als 1 mm, insbesondere mit weniger als 0,5 mm erhaben und/oder vertieft ausgebildeten Merkmalen. Die Grundfläche 10 kann beispielsweise eine gebürstete, erodierte, genarbte, geätzte, strichpolierte, hochglanzpolierte undloder gefräste 3D-Hintergrundstruktur aufweisen.

Der Stoßrand 12 ist gegenüber der Grundfläche 10 ebenfalls erhaben ausgebildet. Der Stoßrand 12 ist beispielsweise 2 mm bis 3 mm erhaben gegenüber der Grundfläche 10 des Transportbehälters 2 ausgebildet. Insbesondere steht der Stoßrand 12 bevorzugt auch weiter als die Reliefelemente 20 heraus, sodass sich die Reliefelemente 20 zweier identischer, nebeneinander angeordneter Transportbehälter 2 nicht berühren, wenn die Seitenwände 8 der Transportbehälter 2 aneinander stoßen.

Die Seitenwand 8 weist eine Inmould-Folie 22 auf, welche im dargestellten Ausführungsbeispiel die gesamte Grundfläche 10 und sämtliche Reliefelemente 20 bedeckt. In weiteren, nicht dargestellten Ausführungsformen kann der Transportbehälter 2 eine oder mehrere Inmould-Folien 22 aufweisen, welche die Grundfläche 10 der Seitenwand 8 nur teilweise bedecken. In weiteren, nicht dargestellten Ausführungsformen kann der Transportbehälter 2 auch eine oder mehrere Inmould-Folien 22 aufweisen, welche nur einige der Reliefelemente 20 oder invertierten Reliefelemente 21 bedecken oder welche diese nur teilweise bedecken.

Es kann vorgesehen sein, dass die Inmould-Folie 22 sich nicht nur über eine Seitenwand 8, sondern über mehrere Seitenwände 8 erstreckt. Insbesondere kann die Inmould-Folie 22 auch umlaufend um die Seitenwände 8 des Transportbehälters 2 ausgebildet sein, d.h. alle Seitenwände 8 bedecken. Die Inmould-Folie 22 kann alternativ auch einen Eckbereich des Transportbehälters 2 bedecken, insbesondere dabei eine oder zwei Seitenwände 8.

In der dargestellten Ausführungsform weist die Inmould-Folie 22 einen der Grundfläche 10 zugeordneten ersten Bereich 24 auf, welcher hier beispielsweise der Bereich ist, in dem die Inmould-Folie 22 die gesamte Grundfläche 10 bedeckt. Außerdem weist die Inmould-Folie für jedes Reliefelement 20 einen zweiten Bereich 26 auf, in dem die Inmould-Folie 22 das entsprechende Reliefelement 20 bedeckt.

Figur 2 zeigt eine Inmould-Folie 22, wobei diese beispielhaft entsprechend ihrer Außenkontur 28 so ausgebildet ist, dass ihr erster Bereich 24 nicht die gesamte Grundfläche 10 der Seitenwand 8 (hier nicht dargestellt) bedeckt, sondern lediglich einen Teil davon.

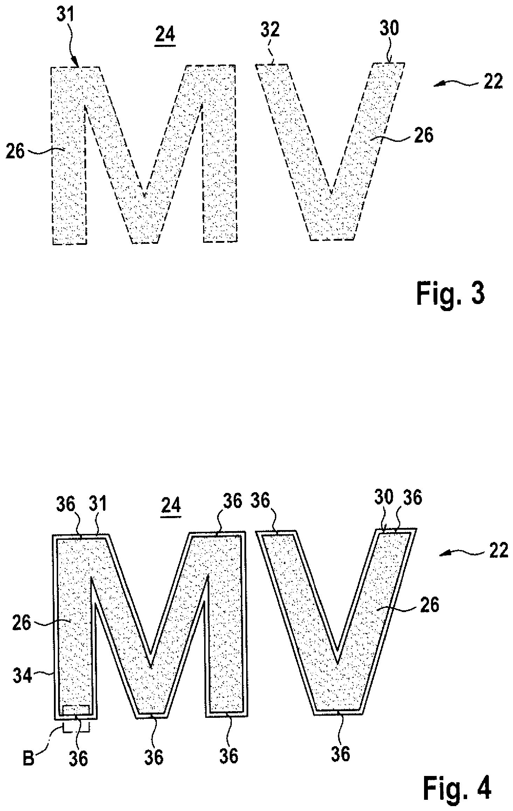

Figur 3 zeigt den in Figur 2 dargestellten Bereich A der Inmould-Folie 22 in vergrößerter Darstellung gemäß einer ersten Ausführungsform der Inmould-Folie 22.

Dargestellt ist ein Teil der Inmould-Folie 22 mit dem der Grundfläche 10 zugeordneten ersten Bereich 24, einem dem Reliefelement "M" zugeordneten zweiten Bereich 26 und einem dem Reliefelement "V" zugeordneten zweiten Bereich 26. In einem Übergangsbereich 30 zwischen dem ersten Bereich 24 und dem zweiten Bereich 26, weist die Inmould-Folie 22 eine Vorkonditionierung 31 in Form einer Perforation 32 auf, welche die beiden zweiten Bereiche 26 jeweils vollständig umgibt. Der Übergangsbereich 30 kann im Folgenden auch als eine Innenkontur der Inmould-Folie 22 bezeichnet werden, und wird auch mit Bezug zu den Figuren 5 bis 13 dargestellt und näher erläutert.

In Figur 4 ist eine Vergrößerung des in Figur 2 dargestellten Bereichs A gemäß einer weiteren Ausführungsform der Inmould-Folie 22 dargestellt.

Auch hier weist die Inmould-Folie 22 einen der Grundfläche 10 zugeordneten ersten Bereich 24 und zwei den Reliefelementen 20 zugeordnete zweite Bereiche 26 auf. Im Übergangsbereich 30 zwischen dem ersten Bereich 24 und dem zweiten Bereich 26 weist die Inmould-Folie 22 eine Vielzahl von Vorkonditionierungen 31 in Form von Schnitten 34 auf, wobei im dargestellten Ausführungsbeispiel für das Reliefelement "M" insgesamt fünf Schnitte 34 vorgesehen sind und für das Reliefelement "V" insgesamt drei Schnitte 34. Die in Figur 4 dargestellten Vorkonditionierungen 31 können in weiteren Ausführungsformen auch Anstanzungen, Stanzungen oder z. B. Ausspanungen sein.

Zwischen den Schnitten 34 befinden sich Stege 36, wobei dem Reliefelement "M" beispielhaft fünf Stege 36 zugeordnet sind und dem Reliefelement "V" drei Stege 36 zugeordnet sind.

Figur 5 zeigt eine vergrößerte Detaildarstellung des Bereichs B aus Figur 4 an einem Fuß des Reliefelements "M".

Der erste Bereich 24 ist mit dem zweiten Bereich 26 über den Steg 36 verbunden, sodass die Inmould-Folie 22 einstückig ist. Seitlich des Steges 36 befinden sich zwei Vorkonditionierungen 31, welche wie beschrieben als Schnitte 34 ausgebildet sind. Der Übergangsbereich 30 zwischen dem ersten Bereich 24 und dem zweiten Bereich 26 wird durch den Steg 36 und die Vorkonditionierungen 31 gebildet. Beim Hinterspritzen der Inmould-Folie 22 und im Verbund mit dem Reliefelement 20 oder dem invertierten Reliefelement 21 des Behältergrundkörpers 4 entstehen aus den Vorkonditionierungen 31 die wohldefinierten Ausgleichsaussparungen 23, welche im Folgenden mit Bezug zu Figur 6 und 7 dargestellt und beschrieben sind. Der Übergangsbereich 30 weist eine Dicke d₁ auf. Der Steg 36 weist eine Stegbreite d₂ auf.

Figur 6 zeigt eine Schnittansicht durch die in Figur 1 dargestellte Linie C - C, d.h. durch die Mitte des Reliefelements "M". Dargestellt ist ein Schnitt durch den Behältergrundkörper 4 und durch die darauf angeordnete Inmould-Folie 22. Die Größenverhältnisse sind nicht maßstabsgetreu wiedergegeben, um das Verständnis zu erleichtern.

Die Inmould-Folie 22 weist einen ersten Bereich 24 auf, welcher die Grundfläche 10 des Behältergrundkörpers 4 bedeckt. Die Inmould-Folie 22 weist einen zweiten Bereich 26 auf, welcher das Reliefelement 20 bedeckt. Weiterhin umfasst die Inmould-Folie 22 zwei Übergangsbereiche 30 zwischen dem ersten Bereich 24 und dem zweiten Bereich 26.

Der in Figur 4 beispielsweise links dargestellte erste Übergangsbereich 30 weist eine wohldefinierte Ausgleichsaussparung 23 auf, die als eine Öffnung 25 ausgebildet ist. Die Öffnung 25 ist beispielsweise das Produkt einer der mit Bezug zu den Figuren 3 bis 5 beschriebenen Vorkonditionierungen 31 nach dem Spritzguss. Am rechten Übergangsbereich 30 weist die Inmould-Folie 22 den Steg 36 auf, der weiterhin den ersten Bereich 24 mit dem zweiten Bereich 26 miteinander verbindet.

Das Reliefelement 20 hat eine Höhe d₆. Die Länge des Steges 36, d.h. die Breite d₁ des Übergangsbereichs 30, entspricht bis auf die durch den Druck beim Spritzguss bedingte Verzerrung im Wesentlichen der Höhe d₆ des Reliefelements 20.

Die Inmould-Folie 22 umfasst in der dargestellten Ausführungsform vier Schichten, wobei auf der dem Behältergrundkörper 4 zugewandten Seite 40 zumindest teilweise eine erste Druckschicht 44 angeordnet ist. Über der ersten Druckschicht 44 befindet sich eine die zweite Schicht bildende Grundfolie 46, welche mit einer die dritte Schicht bildenden zweiten Druckschicht 48 zumindest teilweise bedeckt ist. Auf der dem Behältergrundkörper 4 abgewandten Seite 42 der Inmould-Folie 22 befindet sich eine Deckschicht 50, welche beispielsweise eine Lackierung und/oder eine Kaschierung sein kann.

Figur 7 zeigt eine alternative Ausführungsform zu der mit Bezug zu Figur 1 und 6 beschriebenen Ausführungsform, wobei hier das "M" als invertiertes Reliefelement 21 ausgebildet ist. Der Behältergrundkörper 4 umfasst die Grundfläche 10 und das bezüglich der Grundfläche 10 vertieft ausgebildete, invertierte Reliefelement 21, das beispielsweise den Buchstaben "M" bildet. Die Tiefe des invertierten Reliefelements ist durch d₇ dargestellt. Die Inmould-Folie 22 umfasst, wie mit Bezug zu Figur 6 bereits beschrieben, den ersten Bereich 24 und den zweiten Bereich 26, sowie entsprechende Übergangsbereiche 30, welche den ersten und zweiten Bereich 24, 26 miteinander verbinden. Im links dargestellten Übergangsbereich 30 ist die wohldefinierte Ausgleichsaussparung 23 durch die Öffnung 25 gebildet und im rechts dargestellten Übergangsbereich 30 befindet sich der Steg 36. Die Inmould-Folie 22 umfasst, wie mit Bezug zu Figur 6 beschrieben, eine vierschichtige Struktur, wobei die dem Behältergrundkörper 4 zugewandte Seite 40 eine erste Druckschicht 44 umfasst und die dem Behältergrundkörper 4 abgewandte Seite 42 die Deckschicht 50.

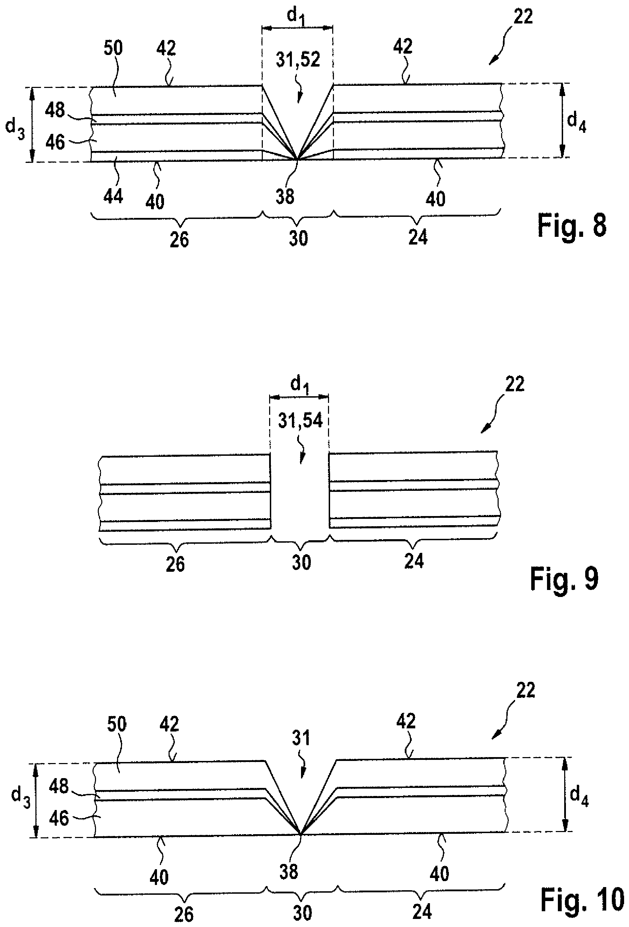

Figur 8 zeigt eine Schnittdarstellung eines Teils einer Inmould-Folie 22 mit Darstellung des ersten Bereichs 24, des Übergangsbereichs 30 und des zweiten Bereichs 26, bevor diese auf dem Behältergrundkörper 4 (hier und im Folgenden nicht dargestellt) platziert und hinterspritzt wurde, d. h. einer Inmoud-Folie 22, die z. B. noch dem Spritzgusswerkzeug zugeführt wird.

Im Übergangsbereich 30 weist die Inmould-Folie 22 eine als Bereich 52 mit verringerter Dicke ausgebildete Vorkonditionierung 31 auf. Der Bereich 52 mit verringerter Dicke ist hier durch eine Anstanzung gebildet, wobei durch die Anstanzung die Inmould-Folie 22 nicht wie bei einer Stanzung in zwei Teile zerteilt wurde, sondern ein Filmscharnier 38 aufweist, das hier beispielsweise in der Mitte des Übergangsbereichs 30 vorhanden ist.

Das Filmscharnier 38 ist auf der dem Behältergrundkörper 4 zugewandten Seite 40 vorgesehen. In alternativen Ausführungsformen kann das Filmscharnier 38 auf der dem Behältergrundkörper 4 abgewandten Seite 42 vorgesehen sein, wobei die Anstanzung von der entsprechenden Seite aus erfolgt.

Die Inmould-Folie 22 umfasst die mit Bezug zu Figuren 6 und 7 beschriebene Schichtfolge mit der dem Behältergrundkörper 4 zugewandten ersten Druckschicht 44, gefolgt von der Grundfolie 46, der zweiten Druckschicht 48 und der dem Behältergrundkörper 4 abgewandten Deckschicht 50. Die Inmould-Folie 22 weist in ihrem zweiten Bereich 26 eine Dicke d₃ und in ihrem ersten Bereich eine Dicke d₄ auf, wobei die Dicken d₃ und d₄ hier beispielsweise und typischerweise gleich ausgebildet sind.

Figur 9 zeigt eine Inmould-Folie 22 gemäß einer alternativen Ausführungsform, wobei wie in Figur 8 der erste Bereich 24, der Übergangsbereich 30 und der zweite Bereich 26 dargestellt sind. Im Übergangsbereich 30 weist die Inmould-Folie 22 eine als Öffnung 54 ausgebildete Vorkonditionierung 31 auf, die beispielsweise ein Schnitt 34 oder eine Perforation 32 sein kann.

Figur 10 zeigt eine Inmould-Folie 22 gemäß einer alternativen Ausführungsform, wobei die Inmould-Folie 22 drei Schichten umfasst. An der dem Behältergrundkörper 4 zugewandten Seite 40 der Inmould-Folie 22 befindet sich die Grundfolie 46, wobei diese von der zweiten Druckschicht 48 bedeckt ist. Auf der dem Behältergrundkörper 4 abgewandten Seite 42 befindet sich die Deckschicht 50, welche beispielsweise eine Lackierung undloder eine Kaschierung sein kann. Die Inmould-Folie 22 ist ansonsten wie zuvor beschrieben ausgebildet und umfasst im dargestellten Ausführungsbeispiel das Filmscharnier 38 im Übergangsbereich 30.

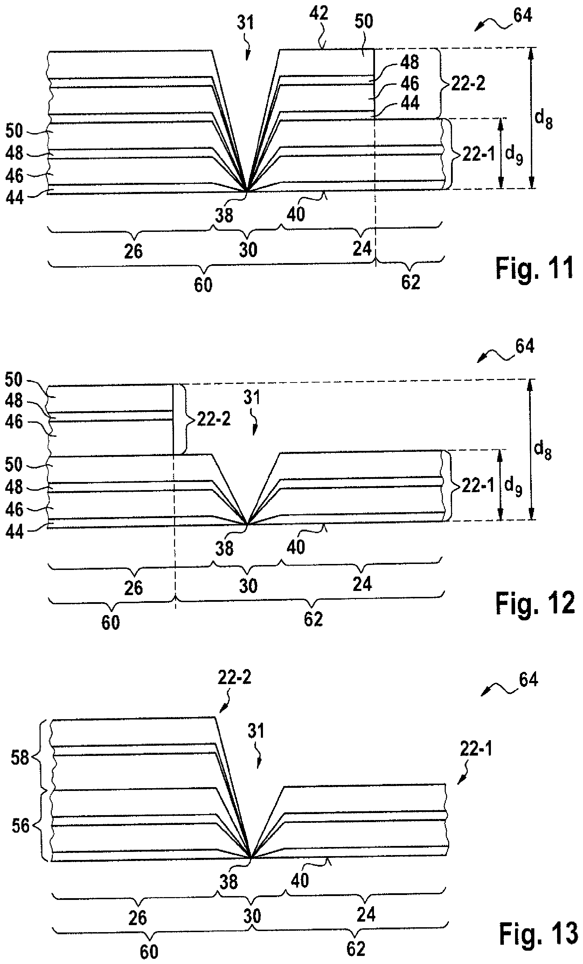

Figur 11 zeigt eine Doppelfolie 64 mit zwei übereinander angeordneten Inmould-Folien 22-1, 22-1, wobei wie in Figur 8 bis 10 entsprechend der erste Bereich 24, der zweite Bereich 26 und der Übergangsbereich 30 dargestellt sind. Die beiden Inmould-Folien 22-1, 22-2 liegen flächig aufeinander auf, wobei eine erste Inmould-Folie 22-1 dem Behältergrundkörper 4 zugewandt ist und eine zweite Inmould-Folie 22-2 dem Behältergrundkörper 4 abgewandt ist (bzw. sein wird). Beide Inmould-Folien 22-1, 22-2 weisen im Übergangsbereich 30 die Vorkonditionierung 31 auf, wobei diese wiederum das Filmscharnier 38 umfasst, welches sich auf der dem Behältergrundkörper 4 zugewandten Seite 40 befindet. Beide Inmould-Folien 22-1, 22-2 umfassen im dargestellten Ausführungsbeispiel die gleiche vierschichtige Struktur, welche mit Bezug zu den Figuren 6 bis 9 beschrieben wurde. Die zweite Inmould-Folie 22-2 ist im ersten Bereich 24 jedoch verkürzt ausgebildet und liegt dort nur teilweise auf der ersten Inmould-Folie 22-1 auf. Die Inmould-Folien 22-1, 22-2 weisen somit einen Überlappungsbereich 60 auf und im ersten Bereich 24 einen Einzelfolienbereich 62, welcher der nur durch die erste Inmould-Folie 22-1 gebildet ist. Im Überlappungsbereich 60 weist die Doppelfolie 64 eine Dicke d₈ auf und im Einzelfolienbereich 62 eine Dicke dg.

Figur 12 zeigt eine alternative Ausführungsform einer Doppelfolie 64, die zwei Inmould-Folien 22-1, 22-2 umfasst, wobei die erste Inmould-Folie 22-1 eine mit Bezug zu den Figuren 6 bis 9 beschriebene vierschichtige Inmould-Folie 22 ist und wobei die zweite Inmould-Folie 22-2 eine mit Bezug zu Figur 10 beschriebene dreischichtige Inmould-Folie 22 ist. Die Doppelfolie 64 umfasst im Übergangsbereich 30 das die wohldefinierte Ausgleichsaussparung 23 ausbildende Filmscharnier 38. Die zweite Inmould-Folie 58 bedeckt die erste Inmould-Folie 56 nicht vollflächig. Der Überlappungsbereich 60 ist bei dieser Ausführungsform nur in einem Teil des zweiten Bereichs 26 vorgesehen, d. h. auf einem Teil des Reliefelements 20 oder invertierten Reliefelements 21, und in der Grundfläche 10 liegt der Einzelfolienbereich 62 vor.

Figur 13 zeigt eine weitere Ausführungsform der Doppelfolie 64, wobei, wie mit Bezug zu Figur 12 beschrieben, die erste Inmould-Folie 22-1 als vierschichtige Inmould-Folie 22 ausgebildet ist und die zweite Inmould-Folie 22-2 als dreischichtige Inmould-Folie 22 ausgebildet ist. Im Übergangsbereich 30 ist die wohldefinierte Ausgleichsaussparung 23 als Filmscharnier 38 ausgebildet. Der Überlappungsbereich 60 ist bei dieser Ausführungsform nur genau im zweiten Bereich 26, d. h. auf dem Reliefelement 20 oder invertierten Reliefelement 21 vorgesehen, sodass in der Grundfläche 10 der Einzelfolienbereich 62 vorliegt

Bei den mit Bezug zu den Figuren 11 bis 13 beschriebenen Ausführungsformen kann insbesondere vorgesehen sein, dass die erste Inmould-Folie 22-1 matt und die zweite Inmould-Folie 22-2 hochglänzend ausgeführt ist oder umgekehrt.

Weitere Ausführungsformen (nicht dargestellt) können auch Doppelfolien 64 umfassen, wobei beide Inmould-Folien 22-1, 22-2 als dreischichtige Inmould-Folien 22 ausgebildet sind oder wobei die erste dem Behältergrundkörper 4 zugewandte Inmould-Folie 22-1 eine dreischichtige Inmould-Folie 22 ist und die zweite dem Behältergrundkörper 4 abgewandte Inmould-Folie 22-2 eine vierschichtige Inmould-Folie 22 ist.

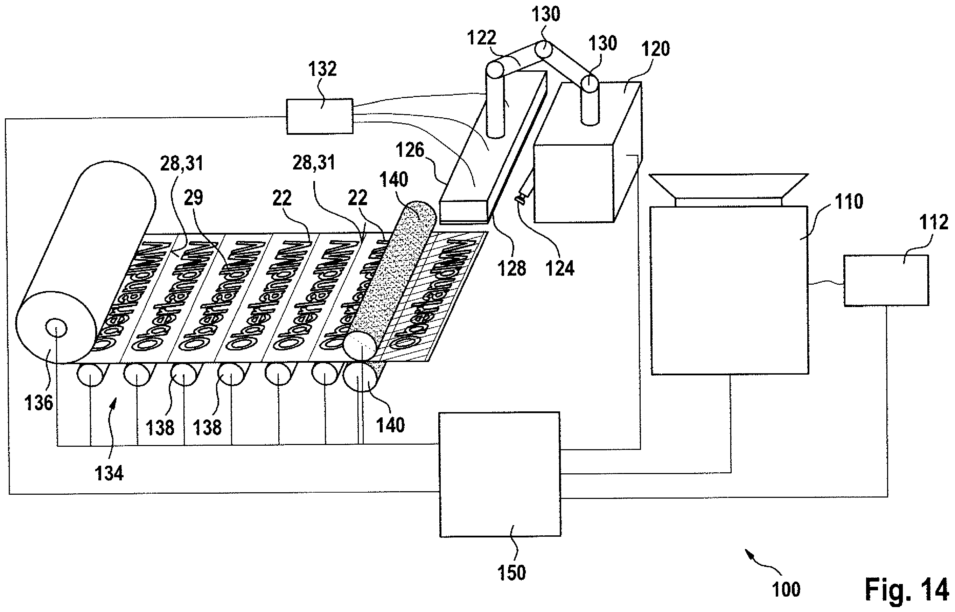

Figur 14 zeigt eine Spritzgussanlage 100 gemäß einer beispielhaften Ausführungsform der Erfindung.

Die Spritzgussanlage 100 umfasst ein Spritzgusswerkzeug 110, in dem eine Inmouldfolie 22 von dem den Behältergrundkörper bildenden Kunststoff hinterspritzt wird. Das Spritzgusswerkzeug 110 ist mit einer ersten Vakuumanlage 112 gekoppelt, welche eingerichtet ist, an einer Werkzeugbacke (nicht dargestellt) des Spritzgusswerkzeugs 110 ein oder mehrere Vakua anzulegen, um die eingesetzte Inmouldfolie 22 als ganze oder auch mit Inselbereichen in Position zu halten.

Die Spritzgussanlage 100 umfasst außerdem eine Robotervorrichtung 120 mit hier beispielhaft einem Roboterarm 122, der einen mittels Gelenken 130 frei im Raum positionierbaren Manipulierkopf 126 aufweist. An der Robotervorrichtung 120 ist eine Kamera 124 angebracht, die mit einer entsprechenden Software dazu eingerichtet ist, Bedruckungen 29 und Vorkonditionierungen 31, wie etwa Außenkonturen 28 der Inmouldfolien 22 zu erkennen, oder die Lage der Inmouldfolie 22 zu erkennen.

Der Manipulierkopf 126 umfasst außerdem eine Saugvorrichtung 128, die an eine zweite Vakuumanlage 132 angeschlossen ist, um entlang von Vakuumkanten Vakuum zu erzeugen. Mittels der Saugvorrichtung 128 kann der Manipulierkopf 126 die Inmould-Folien 22 vereinzeln und in die Werkzeugbacke des Spritzgusswerkzeugs 110 zur anschließenden Hinterspritzung einlegen.

Die Inmould-Folien 22 liegen zunächst in aufgewickelter Form auf einer Rolle 136 vor, d.h. werden dem Spritzgusswerkzeug 110 im dargestellten Ausführungsbeispiel als Rollenware zugeführt. Die Zuführvorrichtung 134 entrollt die Rolle 136. Sie umfasst hier eine Reihe von Förderrollen 138, wobei dies nur eine von vielen Möglichkeiten ist, die dem Fachmann geläufig sind.

In Figur 14 ist weiterhin ein Walzenpaar mit zwei ineinander greifenden strukturierten Walzen 140 dargestellt, durch welche die Inmould-Folien 22 geführt werden, und welche eine Strukturierung auf den Inmould-Folien 22 erzeugt, die einem Matteffekt entspricht.

Das Spritzgusswerkzeug 110, die Robotervorrichtung 120, die Vakuumanlagen 112, 132 und die Zuführvorrichtung 134 sind mit einer Zentralsteuerung 150 verbunden, welche die einzelnen Prozesse aufeinander abstimmt. Insbesondere kann die Zentralsteuerung 150 durch Ansteuerung der ersten Vakuumanlage 112 am Spritzgusswerkzeug 110 und der zweiten Vakuumanlage 132 am Manipulierkopf 126 eine präzise Übergabe und Positionierung der Inmould-Folie 22 im Spritzgusswerkzeug 110 bewirken.

### Bezugszeichenliste

- 2: Transportbehälter
- 4: Behältergrundkörper
- 6: Boden
- 8: Seitenwand
- 10: Grundfläche
- 12: Stoßrand
- 14: Stapelrand
- 16: Griffleiste
- 18: Durchgriffsöffnung
- 20: Reliefelement
- 21: invertiertes Reliefelement
- 22: Inmould-Folie
- 22-1: erste Inmould-Folie
- 22-2: zweite Inmould-Folie
- 23: wohldefinierte Ausgleichsaussparung
- 24: erster Bereich
- 25: Öffnung
- 26: zweiter Bereich
- 28: Außenkontur
- 29: Bedruckung
- 30: Übergangsbereich
- 31: Vorkonditionierung
- 32: Perforation
- 34: Schnitt
- 36: Steg
- 38: Filmscharnier
- 40: dem Behältergrundkörper zugewandte Seite
- 42: dem Behältergrundkörper abgewandte Seite
- 44: erste Druckschicht
- 46: Grundfolie
- 48: zweite Druckschicht
- 50: Deckschicht
- 52: Bereich mit verringerter Dicke
- 54: Öffnung
- 60: Überlappungsbereich
- 62: Einzelfolienbereich
- 64: Doppelfolie
- 100: Spritzgussanlage
- 110: Spritzgusswerkzeug
- 112: erste Vakuumanlage
- 120: Robotervorrichtung
- 122: Roboterarm
- 124: Kamera
- 126: Manipulierkopf
- 128: Saugvorrichtung
- 130: Gelenk
- 132: zweite Vakuumanlage
- 134: Zuführvorrichtung
- 136: Rolle
- 138: Förderrolle
- 140: strukturierte Walze
- 150: Zentralsteuerung

- d₁: Breite des Übergangsbereichs
- d₂: Stegbreite
- d₃: Dicke der Folie im zweiten Bereich
- d₄: Dicke der Folie im ersten Bereich
- d₆: Höhe des Reliefelements
- d₇: Tiefe des invertierten Reliefelements
- d₈: Dicke der beiden Inmould-Folien im Überlappungsbereich
- d₉: Dicke der Inmould-Folie im Einzelfolienbereich

## Patentansprüche

1. Arbeitsverfahren einer Spritzgussanlage (100) zur Herstellung von Transportbehältern (2) mit Inmould-Folien (22), insbesondere Flaschenkästen zur Aufnahme von Getränkeflaschen oder Flaschengebinden,
wobei die Spritzgussanlage (100) zumindest eine Robotervorrichtung (120) und ein Spritzgusswerkzeug (110) aufweist,
wobei das Arbeitsverfahren die folgenden Schritte umfasst:
a) Zuführen von Inmould-Folien (22) zu der Robotervorrichtung (120) als Bandware, insbesondere Rollenware,
b) Vereinzeln der Inmould-Folien (22) mittels der Robotervorrichtung (120), und
c) Einlegen der vereinzelten Inmould-Folien (22) mittels der Robotervorrichtung (120) in eine Werkzeugbacke des Spritzgusswerkzeugs (110) zur anschließenden Hinterspritzung.

2. Verfahren nach Anspruch 1, wobei im Schritt a) die dem Spritzgusswerkzeug (110) als Bandware zugeführten Inmould-Folien (22) Außenkonturen (28) mit Vorkonditionierungen (31) in Form von Bereichen (52) mit verringerten Foliendicken oder Öffnungen (54) aufweisen.

3. Verfahren nach Anspruch 2, wobei im Schritt b) die Robotervorrichtung (120) die Inmould-Folien (22) mittels Vakuumsaugens oder mittels elektrostatischer Aufladung den Außenkonturen (28) entsprechend vereinzelt.

4. Verfahren nach einem der vorhergehenden Ansprüche, wobei im Schritt b) die Robotervorrichtung (120) entsprechend vorgegebenen oder erkannten Außenkonturen (28) die Inmould-Folien (22) vereinzelt, insbesondere ausstanzt oder ausschneidet.

5. Verfahren nach einem der vorhergehenden Ansprüche, wobei im Schritt a) die dem Spritzgusswerkzeug (110) als Bandware zugeführten Inmould-Folien (22) innerhalb einer Außenkontur (28) gelegene Innenkonturen mit Vorkonditionierungen (31) in Form von Bereichen (52) mit verringerten Foliendicken oder Öffnungen (54) aufweisen.

6. Verfahren nach einem der vorhergehenden Ansprüche, wobei die Robotervorrichtung (120) innerhalb einer Außenkontur (28) gelegene Innenkonturen der Inmould-Folien (22) zumindest teilweise anstanzt, ausstanzt, schneidet oder perforiert, um Vorkonditionierungen (31) der Inmould-Folien (22) auszubilden.

7. Verfahren nach Anspruch 5 oder 6, wobei die Robotervorrichtung (120) Inselbereiche der Inmould-Folien (22) entsprechend den Innenkonturen vereinzelt.

8. Verfahren nach einem der vorhergehenden Ansprüche, wobei die Werkzeugbacke des Spritzgusswerkzeugs (110) eine Werkzeugbackengrundfläche und zumindest ein bezüglich der Werkzeugbackengrundfläche erhaben ausgebildetes Werkzeugbackenreliefelement oder zumindest ein bezüglich der Werkzeugbackengrundfläche vertieft ausgebildetes invertiertes Werkzeugbackenreliefelement aufweist, und wobei eine Inmould-Folie (22) im Schritt c) derart in das Spritzgusswerkzeug (110) eingelegt wird, dass sie nach der Hinterspritzung einen ersten Bereich (24) aufweist, in dem die Inmould-Folie (22) zumindest teilweise eine der Werkzeugbackengrundfläche entsprechende Grundfläche (10) des Transportbehälters (2) bedeckt, und einen zweiten Bereich (26), in dem die Inmould-Folie (22) ein dem Werkzeugbackenreliefelement oder dem invertierten Werkzeugbackenreliefelement entsprechendes invertiertes Reliefelement (21) oder Reliefelement (20) des Transportbehälters (2) bedeckt.

9. Verfahren nach einem der Ansprüche 5 bis 7 und Anspruch 8, wobei zumindest eine Innenkontur der Inmould-Folie (22) einem Übergangsbereich (30) vom ersten Bereich (24) zum zweiten Bereich (26) entspricht.

10. Verfahren nach einem der vorhergehenden Ansprüche mit dem weiteren Schritt:
d) Festhalten der Inmould-Folie (22) in der Position bei der Hinterspritzung durch zumindest eine Vakuumkante oder durch elektrostatische Aufladung.

11. Verfahren nach einem der Ansprüche 8 oder 9 und Anspruch 10, wobei für zumindest ein invertiertes Reliefelement (21) oder Reliefelement (20) zumindest eine eigene Vakuumkante vorgesehen ist.

12. Verfahren nach einem der vorhergehenden Ansprüche, wobei beim Zuführen der Inmould-Folien (22) im Schritt a) diese durch ein Walzenpaar mit zwei ineinandergreifenden Walzen (140) mit strukturierter Oberfläche durchgeführt werden, wobei zumindest abschnittsweise eine Strukturierung auf den Inmould-Folien (22) erzeugt wird, die einem Matteffekt entspricht.

13. Verfahren zur Herstellung eines Transportbehälters (2) mit zumindest einer Inmould-Folie (22) unter Verwendung des Arbeitsverfahrens nach einem der Ansprüche 1 bis 12.

14. Verfahren nach Anspruch 13 unter Verwendung des Arbeitsverfahrens nach Anspruch 9, wobei sich während des Hinterspritzens in dem Übergangsbereich (30) vom ersten Bereich (24) zum zweiten Bereich (26) zumindest eine wohldefinierte Ausgleichsaussparung (23) in der Inmould-Folie (22) ausbildet.

15. Spritzgussanlage (100) zur Herstellung von Transportbehältern (2) mit Inmould-Folien (22), insbesondere Flaschenkästen zur Aufnahme von Getränkeflaschen oder Flaschengebinden,
wobei die Spritzgussanlage (100) zumindest eine Robotervorrichtung (120) und ein Spritzgusswerkzeug (110) aufweist, die eingerichtet sind, um eines der Verfahren nach einem der Ansprüche 1 bis 14 durchzuführen.

## Claims

1. An operating method of an injection molding system (100) for the production of transport containers (2) with inmould foils (22), in particular bottle crates for holding beverage bottles or bottle containers,
wherein the injection molding system (100) comprises at least one robotic device (120) and an injection molding device (110),
wherein the operating method comprises the following steps:
a) feeding inmould foils (22) to the robot device (120) as strip material, in particular roll material,
b) separating the inmould foils (22) by means of the robotic device (120), and
c) inserting the separated inmould foils (22) by means of the robot device (120) into an injection molding device jaw of the injection molding device (110) for subsequent back injection.

2. The method according to claim 1, wherein, in step a), the inmould foils (22) supplied to the injection molding device (110) as strip material have outer contours (28) with preconditioning (31) in the form of areas (52) with reduced foil thicknesses or openings (54).

3. The method according to claim 2, wherein in step b) the robot device (120) separates the inmould foils (22) by means of vacuum suction or by means of electrostatic charging according to the outer contours (28).

4. The method according to any one of the preceding claims, wherein, in step b), the robot device (120) separates, in particular punches out or cuts out, the inmould foils (22) according to predetermined or recognized outer contours (28).

5. The method according to any one of the preceding claims, wherein, in step a), the inmould foils (22) supplied to the injection molding device (110) as strip material comprise inner contours located within an outer contour (28) with preconditioning (31) in the form of regions (52) with reduced foil thicknesses or openings (54).

6. The method of any one of the preceding claims, wherein the robotic device (120) at least partially punches, die cuts, cuts or perforates inner contours located within an outer contour (28) of the inmould foils (22) to form preconditioners (31) of the inmould foils (22).

7. The method according to claim 5 or 6, wherein the robot device (120) separates island regions of the inmould foils (22) according to the inner contours.

8. The method according to any one of the preceding claims, wherein injection molding device jaw of the injection molding device (110) has an injection molding device jaw base surface and at least one injection molding device jaw relief element formed in a protruding manner with respect to the injection molding device jaw base surface, or at least one inverted injection molding device jaw relief element formed in a recessed manner with respect to the injection molding device jaw base surface, and wherein an inmould foil (22) is inserted into the injection molding device (110) in step c) in such a way that, after the back injection, the inmould foil (22) has a first region (24) in which the inmould foil (22) at least partially covers a base surface (10) of the transport container (2) corresponding to the injection molding device jaw base surface, and a second region (26) in which the inmould foil (22) covers an inverted relief element (21) or relief element (20) of the transport container (2) corresponding to the injection molding device jaw relief element or the inverted injection molding device jaw relief element.

9. The method of any one of claims 5 to 7 and claim 8, wherein at least one inner contour of the inmould foil (22) corresponds to a transition region (30) from the first region (24) to the second region (26).

10. The method according to any one of the preceding claims, comprising the further step of:
d) holding the inmould foil (22) in position during back injection by at least one vacuum edge or by electrostatic charging.

11. The method according to any one of claims 8 or 9 and claim 10, wherein, for at least one inverted relief element (21) or relief element (20), at least one own vacuum edge is provided.

12. The method according to any one of the preceding claims, wherein, when the inmould foils (22) are fed in step a), the same are passed through a pair of rollers having two intermeshing rollers (140) with a structured surface, a structuring corresponding to a mat effect being produced at least in sections on the inmould foils (22).

13. A method of manufacturing a transport container (2) with at least one inmould foil (22) using the operating method according to any one of claims 1 to 12.

14. The method of claim 13 using the working method of claim 9, wherein at least one well-defined compensating recess (23) is formed in the inmould foil (22) during back injection in the transition region (30) from the first region (24) to the second region (26).

15. Injection molding system (100) for producing transport containers (2) with inmould foils (22), in particular bottle crates for holding beverage bottles or bottle containers,
wherein the injection molding system (100) comprises at least one robotic device (120) and an injection molding device (110) configured to perform any one of the methods of any one of claims 1 to 14.

## Revendications

1. Procédé de fonctionnement d'une installation de moulage par injection (100) pour la fabrication de conteneurs de transport (2) avec des films in-mold (22), plus particulièrement des caisses de bouteilles pour contenir des bouteilles ou des récipients à bouteilles, l'installation de moulage par injection (100) comprenant au moins un dispositif robotisé (120) et un outil de moulage par injection (110), le procédé de travail comprenant les étapes suivantes :
a) Alimentation en films in-mold (22) vers le dispositif robotisé (120) en tant que matériau en bande, plus particulièrement en rouleaux,
b) Séparation des films in-mold (22) à l'aide du dispositif robotisé (120) et
c) Insertion des films in-mold (22) séparés au moyen du dispositif robotisé (120) dans une empreinte d'outil de l'outil de moulage par injection (110) en vue d'un surmoulage ultérieur.

2. Procédé selon la revendication 1, dans lequel à l'étape a), les films in-mold (22) alimentés à l'outil de moulage par injection (110) en tant que matériau en bande présentent des contours externes (28) comportant des préconditionnements (31) sous forme de zones (52) avec une épaisseur de film réduite ou des ouvertures (54).

3. Procédé selon la revendication 2, dans lequel à l'étape b), le dispositif robotisé (120) sépare les films in-mold (22) en fonction des contours externes (28) en utilisant une aspiration sous vide ou une charge électrostatique.

4. Procédé selon l'une des revendications précédentes, dans lequel à l'étape b), le dispositif robotisé (120) sépare les films in-mold (22) en fonction des contours externes (28) prédéfinis ou détectés, en les perforant ou en les découpant, notamment.

5. Procédé selon l'une des revendications précédentes, dans lequel à l'étape a), les films in-mold (22) alimentés à l'outil de moulage par injection (110) en tant que matériau en bande présentent des contours internes situés à l'intérieur d'un contour externe (28) et comportant des préconditionnements (31) sous forme de zones (52) avec une épaisseur de film réduite ou des ouvertures (54).

6. Procédé selon l'une des revendications précédentes, dans lequel le dispositif robotisé (120) réalise au moins partiellement des découpes, perforations, découpes ou perforations inversées des contours internes des films in-mold (22) situés à l'intérieur d'un contour externe (28) pour former des préconditionnements (31) des films in-mold (22).

7. Procédé selon la revendication 5 ou 6, dans lequel le dispositif robotisé (120) sépare des zones insulaires des films in-mold (22) correspondant aux contours internes.

8. Procédé selon l'une des revendications précédentes, dans lequel l'empreinte de l'outil de moulage par injection (110) comporte une surface de base de l'empreinte d'outil et au moins un élément de relief de l'empreinte d'outil surélevé par rapport à la surface de base de l'empreinte d'outil ou au moins un élément de relief inversé enfoncé par rapport à la surface de base de l'empreinte d'outil, et dans lequel un film in-mold (22) est inséré dans l'outil de moulage par injection (110) à l'étape c) de manière à présenter, après le surmoulage, une première zone (24) dans laquelle le film in-mold (22) recouvre au moins partiellement une surface de base (10) du conteneur de transport (2) correspondant à la surface de base de l'empreinte d'outil, et une deuxième zone (26) dans laquelle le film in-mold (22) recouvre un élément de relief inversé (21) ou un élément de relief (20) du conteneur de transport (2) correspondant à l'élément de relief de l'empreinte d'outil ou à l'élément de relief inversé de l'empreinte d'outil.

9. Procédé selon l'une des revendications 5 à 7 et la revendication 8, dans lequel au moins un contour interne du film in-mold (22) correspond à une zone de transition (30) entre la première zone (24) et la deuxième zone (26).

10. Procédé selon l'une des revendications précédentes comprenant l'étape supplémentaire :
d) Maintien du film in-mold (22) dans la position lors du surmoulage par au moins un bord sous vide ou par charge électrostatique.

11. Procédé selon l'une des revendications 8 ou 9 et la revendication 10, dans lequel au moins un élément de relief inversé (21) ou un élément de relief (20) est pourvu d'au moins un bord sous vide distinct.

12. Procédé selon l'une des revendications précédentes, dans lequel lors de l'alimentation des films in-mold (22) à l'étape a), cela est réalisé par une paire de rouleaux (140) avec deux rouleaux à surface structurée qui s'engrènent, au moins une structuration étant créée sur les films in-mold (22) qui correspond à un effet mat.

13. Procédé de fabrication d'un conteneur de transport (2) avec au moins un film in-mold (22) en utilisant le procédé de travail selon l'une des revendications 1 à 12.

14. Procédé selon la revendication 13 en utilisant le procédé de travail selon la revendication 9, dans lequel pendant le surmoulage, dans la zone de transition (30) entre la première zone (24) et la deuxième zone (26), au moins un évidement d'équilibrage défini (23) se forme dans le film in-mold (22).

15. Installation de moulage par injection (100) pour la fabrication de conteneurs de transport (2) avec des films in-mold (22), plus particulièrement des caisses de bouteilles pour contenir des bouteilles ou des ensembles de bouteilles,
comprenant au moins un dispositif de robot (120) et un outil de moulage par injection (110), qui sont configurés pour mettre en oeuvre l'un des procédés selon l'une des revendications 1 à 14, dans lequel l'installation de moulage par injection (100) comprend au moins un dispositif robotique (120) et un outil de moulage par injection (110), qui sont conçus pour exécuter un des procédés selon l'une des revendications 1 à 14.
